Europäisches Patentamt

European Patent Office

Office européen des brevets

(19)

(11) Veröffentlichungsnummer: **0 287 872**
B1

## (12) EUROPÄISCHE PATENTSCHRIFT

(45) Veröffentlichungstag der Patentschrift:
19.09.90

(21) Anmeldenummer: 88105235.1

(22) Anmeldetag: 31.03.88

(51) Int. Cl.⁵: **F28C 1/00**

(54) Vorrichtung zur Einleitung von Rauchgasen in das Innere eines Kühlturms.

(30) Priorität: 18.04.87 DE 8705737 U

(43) Veröffentlichungstag der Anmeldung:
26.10.88 Patentblatt 88/43

(45) Bekanntmachung des Hinweises auf die Patenterteilung:
19.09.90 Patentblatt 90/38

(84) Benannte Vertragsstaaten:
BE DE ES FR GB IT NL SE

(56) Entgegenhaltungen:
EP-A- 0 198 146
WO-A-86/05577
DE-U- 8 705 737

(73) Patentinhaber: Balcke-Dürr AG, Homberger
Strasse 2 Postfach 1240, D-4030 Ratingen 1(DE)

(72) Erfinder: Tesche, Walter Dipl.-Ing.,
Hasselbeckstrasse 57, D-4020 Mettmann -
Metzkausen(DE)

(74) Vertreter: Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11(DE)

## Beschreibung

Die Erfindung betrifft eine Vorrichtung zur Einleitung von insbesondere aus einer Rauchgasentschwefelungsanlage kommenden Rauchgasen mittels mindestens einer Rohrleitung in das Innere eines Kühlturms, mit dessen Kühlluft die Rauchgase vermischt und in die Atmosphäre abgeleitet werden, sowie zur Ableitung der in der Rohrleitung anfallenden Flüssigkeiten, insbesondere des kontinuierlich entstehenden Kondensats.

Eine derartige Vorrichtung ist aus der WO-A 86/05 577 bekannt.

Die aus Rauchgasentschwefelungsanlagen austretenden gereinigten Abgase sind bei Einsatz einer Naßentschwefelung vollständig mit Feuchtigkeit gesättigt und haben eine Temperatur von etwa 50°C. Die Ableitung dieser gereinigten Rauchgase in die Atmosphäre erfolgt häufig über einen Kühlturm. Die Rauchgase werden über große Rohrleitungen in den Kühlturm geführt und über geeignete Auslaßaggregate den Abluftschwaden des Kühlturmes beigemischt.

Da die Temperatur des Kühlturmschwadens normalerweise deutlich niedriger ist als die Temperatur der abzuleitenden Rauchgase, kühlen sich die Rauchgase in der Rohrleitung ab, wodurch Feuchtigkeit auskondensiert. Dieses Kondensat schlägt sich zum Teil in der Rohrleitung nieder oder wird zusammen mit mitgerissenen Tropfen aus der Rauchgaswäsche, durch entsprechende Tropfenfangeinrichtungen in den Auslaßaggregaten abgeschieden.

Um Anbackungen von in den Rauchgasen mitgerissenen Feststoffteilchen zu vermeiden, müssen derartige Tropfenfangeinrichtungen regelmäßig gespült werden. Hierbei ist es üblich, die Spülflüssigkeit über die Rohrleitung für die Rauchgase abzuführen.

Bei den bekannten Konstruktionen werden die Rohrleitungen zur Einleitung der Rauchgase zur Kühlturmmitte hin mit einem leichten Gefälle verlegt, so daß die im Inneren der Rohrleitungen anfallenden Flüssigkeiten - unterstützt durch die in den Rohrleitungen strömenden Rauchgase - in die Mitte des Kühlturms gelangen. Das Gefälle liegt hierbei bei etwa 1 %. Die sich am Ende der Rohrleitung sammelnden Flüssigkeiten werden über eine separate Entsorgungsleitung aus dem Kühlturm abgeleitet. Diese Konstruktion erfordert nicht nur eine zusätzliche Rohrleitung mit entsprechender Unterstützungskonstruktion, sondern auch eine aufwendige Montage. Schließlich kann es erforderlich werden, diese der Ableitung des Kondensats und des Spülwassers dienende separate Rohrleitung von Zeit zu Zeit zu reinigen.

Der Erfindung liegt die Aufgabe zugrunde, eine Vorrichtung zur Einleitung von Rauchgasen mittels mindestens einer Rohrleitung in das Innere eines Kühlturms und zur Ableitung der in der Rohrleitung anfallenden Flüssigkeiten zu schaffen, die erheblich einfacher und kostengünstiger ist.

Die Lösung dieser Aufgabenstellung durch die Erfindung ist dadurch gekennzeichnet, daß die Rohrleitung zum Kühlturminneren steigend angeordnet und am Rohrleitungsboden eine zusammen mit dem unteren Teil der Rohrinnenwand einen Ableitungskanal bildende Abdeckung vorgesehen ist, die an ihrem Rand mit Öffnungen für den Durchtritt der Flüssigkeiten aus der Rohrleitung in den Ableitungskanal versehen ist.

Aufgrund dieses Vorschlages der Erfindung entfällt eine separate Rohrleitung zur Abfuhr des kontinuierlich entstehenden Kondensats und ggf. der periodisch anfallenden Reinigungsflüssigkeit, wobei auch auf zusätzliche Unterstützungskonstruktionen für diese separate Rohrleitung verzichtet werden kann. Die Ableitung erfolgt durch einen in Innern der zum Kühlturmrand mit Gefälle verlegten Rohrleitung ausgebildeten Ableitungskanal, der auf einfache Weise durch eine Abdeckung am Rohrleitungsboden gebildet wird. Diese Abdeckung verhindert, daß Schubspannungskräfte von dem mit hoher Geschwindigkeit in der Rohrleitung strömenden Rauchgas auf die in Gegenrichtung ablaufende Flüssigkeit ausgeübt werden. Ohne eine derartige Abdeckung müßte die Neigung der Rohrleitung sehr groß sein, damit die Flüssigkeit entgegen der Strömungsgeschwindigkeit des Rauchgases abfließen könnte. Die Strömungsgeschwindigkeit der Rauchgase liegt bei ausgeführten Anlagen bei 20 m/s. Um einen Eintritt der Flüssigkeiten in den durch die Abdeckung am Rohrleitungsboden gebildeten Ableitungskanal zu ermöglichen, ist dieser mit Öffnungen versehen, die entweder in regelmäßigen Abständen ausgebildet oder durchgehend ausgeführt sind.

Bei einer bevorzugten Ausführungsform der Erfindung ist die Abdeckung durch einen entgegengesetzt zum Rohrboden gewölbten Streifen gebildet, der durch im Abstand voneinander angeordnete Lagerstücke an der Rohrleitung befestigt und dessen Längsränder durch die Lagerstücke unter Bildung eines Spaltes zur Rohrinnenwand angeordnet sind.

Bei einer alternativen Ausbildung wird die Abdeckung durch einen den untersten Teil des Rohrleitungsquerschnittes in der Art einer Sehne abtrennenden Boden gebildet, der mindestens an seinen mit der Rohrinnenwand verbundenen Rändern mit Öffnungen versehen ist.

In beiden Fällen ergibt sich eine besonders einfache Konstruktion zur Ausbildung des Ableitungskanals am Rohrleitungsboden.

Insgesamt ergibt sich mit dem erfindungsgemäßen Vorschlag eine besonders einfache und preiswerte Konstruktion zur Ableitung der kontinuierlich oder periodisch in der Rohrleitung anfallenden Flüssigkeiten. Es entfällt eine separate Entsorgungsleitung mit entsprechender Unterstützungskonstruktion. Außerdem geschieht die Rückführung der Flüssigkeiten durch natürliches Gefälle, so daß keine zusätzliche Pumpe und der hierfür notwendige Energieaufwand erforderlich sind.

Auf der Zeichnung sind zwei Ausführungsbeispiele der erfindungsgemäßen Vorrichtung schematisch dargestellt, und zwar zeigen:

Fig. 1 schematisch einen senkrechten Schnitt durch den unteren Teil eines Kühlturms mit einer Rohrleitung zur Einleitung von Rauchgasen in das Kühlturminnere,

Fig. 2 einen senkrechten Querschnitt durch die Rohrleitung nach Fig. 1,

Fig. 3 einen waagerechten Schnitt durch einen Teil der Rohrleitung und

Fig. 4 eine perspektivische Darstellung einer alternativen Ausführung zur Bildung des Ableitungskanals.

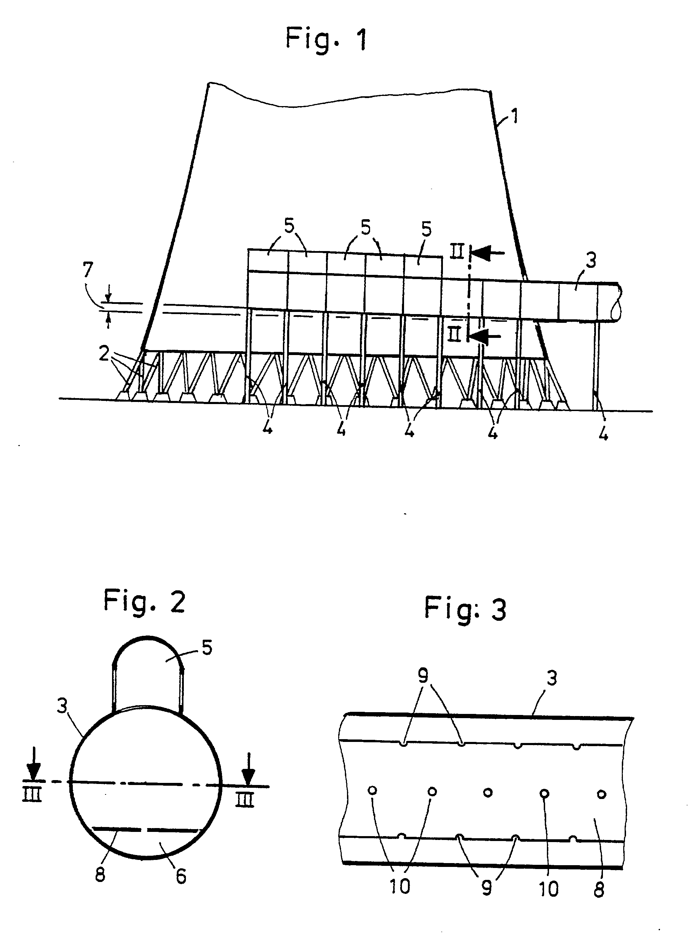

Die Fig. 1 zeigt den unteren Teil einer hyperbolischen, aus Beton hergestellten Kühlturmschale 1, die zur Einleitung der erforderlichen Kühlluft auf Stützen 2 ruht. Die Kühlturmeinbauten sind der besseren Übersichtlichkeit wegen nicht gezeichnet.

In das Kühlturminnere ist beim dargestellten Ausführungsbeispiel eine Rohrleitung 3 eingeführt, die auf einer separaten Tragkonstruktion 4 ruht. Auf dem Ende dieser Rohrleitung 3 sind Auslaßaggregate 5 angeordnet, die für eine möglichst gleichmäßige Einleitung der Rauchgase in den im Kühlturm aufsteigenden Kühlluftschwaden sorgen und ggf. mit Tropfenabscheidern versehen sind.

Um die durch Kondensation der im Rauchgas enthaltenen Feuchtigkeit kontinuierlich in der Rohrleitung 3 entstehenden Flüssigkeiten und ggf. Flüssigkeiten zur Reinigung der Tropfenabscheider aus der Rohrleitung 3 abzuführen, ist diese im unteren Teil mit einem Ableitungskanal 6 versehen. Außerdem ist die Rohrleitung 3 (wie aus Fig. 1 hervorgeht) zum Kühlturminneren steigend verlegt. Das durch den Winkel 7 gebildete Gefälle liegt in der Größenordnung von etwa 1 %.

Beim ersten Ausführungsbeispiel nach den Figuren 2 und 3 wird der Ableitungskanal 6 durch einen ebenen Boden 8 gebildet, der den untersten Teil des Rohrleitungsquerschnittes in der Art einer Sehne abtrennt. Um den Durchtritt der in der Rohrleitung 3 anfallenden Flüssigkeiten in den Ableitungskanal 6 zu ermöglichen, besitzt der Boden 8 an seinen Längsrändern Öffnungen 9. Beim Ausführungsbeispiel sind weitere Öffnungen 10 in der Mitte des Bodens 8 ausgebildet.

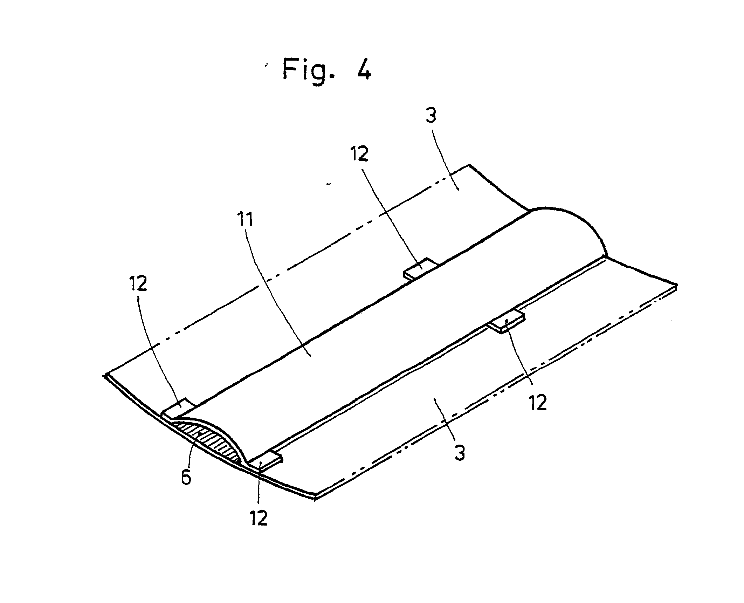

Bei der zweiten Ausführungsform nach Fig. 4 wird der Ableitungskanal 6 durch einen entgegensetzt zum Rohrboden gewölbten Streifen 11 gebildet, der durch im Abstand voneinander angeordnete Lagerstücke 12 an der Rohrleitung 3 befestigt ist. Die Längsränder des Streifens 11 werden hierbei durch die Lagerstücke 12 unter Bildung eines Spaltes zur Rohrinnenwand angeordnet, so daß die sich an der Rohrinnenwand sammelnden Flüssigkeiten nahezu über die gesamte Länge des Streifens 11 in den Ableitungskanal 6 gelangen können.

Bei beiden Ausführungsbeispielen ergibt sich eine besonders einfache Konstruktion für den Ableitungskanal 6, wobei die durch den Boden 8 bzw. den Streifen 11 gebildete Abdeckung dafür sorgt, daß die mit hoher Geschwindigkeit in der Rohrleitung 3 strömenden Rauchgase keine Schubspannunskräfte auf die in der Gegenrichtung fließenden Flüssigkeiten ausüben können. Es genügt demgemäß eine geringe Neigung der Rohrleitung 3 vom Kühlturminneren zum Kühlturmrand, um eine zuverlässige Abfuhr der in der Rohrleitung 3 anfallenden Flüssigkeiten sicherzustellen.

Bezugsziffernliste:

1 Kühlturmschale
2 Stütze
3 Rohrleitung
4 Tragkonstruktion
5 Auslaßaggregat
6 Ableitungskanal
7 Winkel
8 Boden
9 Öffnung
10 Öffnung
11 Streifen
12 Lagerstück

## Patentansprüche

1. Vorrichtung zur Einleitung von insbesondere aus einer Rauchgasentschwefelungsanlage kommenden Rauchgasen mittels mindestens einer Rohrleitung (3) in das innere eines Kühlturms (1), mit dessen Kühlluft die Rauchgase vermischt und in die Atmosphäre abgeleitet werden, sowie zur Ableitung der in der Rohrleitung (3) anfallenden Flüssigkeiten, insbesondere des kontinuierlich entstehenden Kondensats, dadurch gekennzeichnet, daß die Rohrleitung (3) zum Kühlturminneren steigend angeordnet und am Rohrleitungsboden eine zusammen mit dem unteren Teil der Rohrinnenwand einen Ableitungskanal (6) bildende Abdeckung (8, 11) vorgesehen ist, die an ihrem Rand mit Öffnungen (9) für den Durchtritt der Flüssigkeiten aus der Rohrleitung (3) in den Ableitungskanal (6) versehen ist.

2. Vorrichtung nach Anspruch 1, dadurch gekennzeichnet, daß die Abdeckung durch einen entgegengesetzt zum Rohrboden gewölbten Streifen (11) gebildet ist, der durch im Abstand voneinander angeordnete Lagerstücke (12) an der Rohrleitung befestigt und dessen Längsränder durch die Lagerstücke (12) unter Bildung eines Spaltes zur Rohrinnenwand angeordnet sind.

3. Vorrichtung nach Anspruch 1, dadurch gekennzeichnet, daß die Abdeckung durch einen den untersten Teil des Rohrleitungsquerschnittes in der Art einer Sehne abtrennenden Boden (8) gebildet ist, der mindestens an seinen mit der Rohrinnenwand verbundenen Rändern mit Öffnungen (9) versehen ist.

## Claims

1. Device for passing flue gases emerging in particular from a flue gas desulphurizing plant into the interior of a cooling tower (1) by way of at least one pipe (3), the flue gases being mixed with the cooling air of the tower and discharged into the atmosphere, and for discharging the liquids produced in the pipe (3), in particular the continuously forming condensate, characterised in that the pipe (3) rises towards the cooling tower interior and a cover (8, 11), which forms with the lower part of the inner pipe wall a discharge conduit (6), is provided at the bottom of the pipe, which cover comprises holes (9) at its edge to allow the liquids to pass from the pipe (3) into the discharge conduit (6).

2. Device according to claim 1, characterised in that the cover is formed by a strip (11), which is arched in the opposite direction to the bottom of the pipe, is secured to the pipe by spaced bearing pieces (12) and the longitudinal edges of which are arranged across the bearing pieces (12) so as to form a gap with respect to the inner pipe wall.

3. Device according to claim 1, characterised in that the cover is formed by a bottom plate (8), which separates the lowest part of the pipe cross section like a chord and which is provided with holes (9) at least at its edges which are connected to the inner pipe wall.

## Revendications

1. Dispositif pour injecter des gaz de fumées provenant notamment d'une installation de désulfuration de gaz de fumées, au moyen d'au moins une conduite tubulaire (3), à l'intérieur d'une tour de réfrigération (1), avec l'air de refroidissement de laquelle les gaz de fumées sont mélangés et évacués dans l'atmosphère, ainsi que pour l'évacuation des liquides présents dans la conduite tubulaire (3), notamment des condensats qui se forment continuellement, caractérisé en ce que la conduite tubulaire (3) est agencée de manière à présenter une pente montante en direction de l'intérieur de la tour de réfrigération, et en ce qu'il est prévu sur le fond de la conduite tubulaire, une cloison de recouvrement (8, 11) qui constitue avec la partie inférieure de la paroi intérieure de la conduite tubulaire, un canal d'évacuation (6), cette cloison de recouvrement étant pourvue sur ses bords, d'ouvertures (9), pour assurer le passage des liquides de la conduite tubulaire (3) vers le canal d'évacuation (6).

2. Dispositif selon la revendication 1, caractérisé en ce que la cloison de recouvrement est constituée par une bande (11) bombée en direction opposée du fond de la conduite, et fixée sur celle-ci au moyen de pièces-support (12) agencées en étant espacées mutuellement, les bords longitudinaux de la bande de recouvrement délimitant une fente par rapport à la paroi intérieure de la conduite, par suite de l'interposition des pièces-support (12).

3. Dispositif selon la revendication 1, caractérisé en ce que la cloison de recouvrement est constituée par un fond (8) subdivisant la partie inférieure de la section transversale de la conduite tubulaire à la manière d'une corde, et qui est pourvu d'ouvertures (9), au moins au niveau de ses bords reliés à la paroi intérieure de la conduite tubulaire.

# Fig. 1

# Fig. 2

# Fig: 3

# Fig. 4